# EUROPÄISCHE PATENTSCHRIFT

(11) **EP 0 612 798 B1**
(45) Veröffentlichungstag und Bekanntmachung des Hinweises auf die Patenterteilung: **03.04.1996**
(21) Anmeldenummer: 94102219.6
(22) Anmeldetag: 14.02.1994
(51) Int. Cl.: C08K 9/08, C03C 25/02

(54) **Formmassen und deren Verwendung**
Moulding matters and their use
Matières moulables et leur utilisation

(30) Priorität: 25.02.1993 DE 4305728
(43) Veröffentlichungstag der Anmeldung: 31.08.1994
(73) Patentinhaber: BAYER AG, D-51368 Leverkusen (DE); BAYER ANTWERPEN N.V., B-2040 Antwerpen (BE)
(72) Erfinder: Audenaert, Raymond, Dr., B-9229 Hamme (BE); Kirchmeyer, Stephan, Dr., D-51373 Leverkusen (DE); Müller, Hanns-Peter, Dr., D-51519 Odenthal (DE); El Sayed, Aziz, Dr., D-51375 Leverkusen (DE); Heger, Georg, Dr., D-47800 Krefeld (DE)

(56) Entgegenhaltungen:
- EP-A- 0 027 942
- EP-A- 0 201 691
- EP-A- 0 409 524
- DE-A- 1 496 601
- DATABASE WPI Week 8343, Derwent Publications Ltd., London, GB; AN 79-90011B & JP-A-58 156 555 (CENTRAL GLASS KK) 17. September 1983

## Beschreibung

Die vorliegende Erfindung betrifft Formmassen aus thermoplastischem Polymer, beschlichteten Glasfasern und anderen üblichen Zusatz- und Hilfsstoffen und deren Verwendung zur Herstellung von Form-, Preß- und Spritzgußteilchen, Thermoformteilen, Halbzeugen, Platten, Behältern, Geräteteilen, Gehäusen, Rollen, Zahnrädern, Maschinenteilen und Walzen.

Bekanntermaßen werden die Eigenschaften von Verbunden aus Glasfasern und Polymeren in hohem Maße von der Scherfestigkeit zwischen Glasfasern und dem die Glasfaser umgebenden Polymeren, dem sog. Matrixpolymer beeinflußt. Die Aufgabe der Glasfaserschlichte besteht darin, diesen Verbund zwischen der Glasfaser und dem Matrixpolymer herzustellen und zusätzlich die Herstell- und Verarbeitbarkeit der Glasfasern in allen Stufen der Praxis sicherzustellen. Gemäß dem Stand der Technik werden als Schlichten Zusammensetzungen aus Wasser, einem polymeren Bindemittel (dem sog. Filmbildner), einem Haftvermittler, Gleitmitteln, Antistatika und weiteren Hilfsmitteln verwendet, wobei die Rezepturen der Schlichten auf die jeweilige Polymermatrix optimiert werden müssen. Als Bindemittel verwendet man im allgemeinen organische, wasserdispergierbare oder lösliche Polyvinylacetat-, Polyester-, Polyesterepoxid-, Polyurethan-, Polyacrylat-, Polyolefinharze oder deren Mischungen.

Es besteht die allgemeine Vorstellung, daß der auf den Glasfasern verankerte Haftvermittler in direktem Kontakt zur verstärkenden Polymermatrix steht. Dieses Modell läßt jedoch außer acht, daß im Schlichtefilm mengenmäßig der Filmbildner bei weitem überwiegt, so daß er die Glasfasern - einschließlich Haftvermittler - zum größten Teil ummantelt. Zum einen wird die Effektivität der Faser/Matrix-Anbindung über den Haftvermittler durch diese "Sperrschicht" herabgesetzt. Zudem bewirkt der Filmbildner durch Salzgruppen bzw. hydrophile Polyoxyalkylensegmente eine Hydrophile der Glasfaserschlichte, welche gegenüber Wasser als "Docht" wirken kann. Ein hydrolytischer Abbau, der anschließend bevorzugt in der Zwischenschicht zwischen Glasfaser und Polymermatrix abläuft, schädigt die Anbindung der Glasfaser an die Polymermatrix und damit die mechanischen Eigenschaften der Glasfaser-Polymerverbunde in der Regel stark. Dieses Problem ist grundsätzlich unabhängig von der verwendeten Polymermatrix, tritt jedoch in besonderem Maße bei glasfaserverstärktem Polyamid und glasfaserverstärkten Polyarylensulfiden auf.

Eine Möglichkeit, die Hydrolysefestigkeit von Glasfaser-Verbunden zu bestimmen, ist die Lagerung der Glasfaser-Verbunde in Heißwasser (z.B. bei einer Temperatur von knapp unter 100°C) und Bestimmung der mechanischen Werte in Abhängigkeit von der Zeit. Für Polyamid-Glasfaser-Verbunde wird zusätzlich der Heißwasser-Glykol-Test angewendet, wobei Proben der Polyamid-Glasfaser-Verbunde in einer erhitzten Mischung aus Wasser und Glykol gelagert werden. Prüft man Glasfaserverbunde aus Glasfasern gemaß dem Stand der Technik und aus thermoplastischen Polymeren wie beispielsweise Polyamid oder Polyhenylensulfid unter diesen Bedingungen, findet man mit zunehmender Zeit stark abfallende mechanische Werte.

US 3 803 069 und EP-A 137 427 beschreiben Glasfasern, welche blockierte Isocyanatgruppen enthaltend. Derartig beschlichtete Glasfasern sind prinzipiell für die Verstärkung von Polyamid geeignet, jedoch werden die mechanischen Werte der Glasfaser-Verbunde durch Hydrolyse, insbesondere unter den beschriebenen verschärften Bedingungen stark negativ beeinflußt.

Eine weitere Gruppe von Glasfasern wird unter Verwendung sogenannter Epoxidfilmbildner hergestellt, wie sie beispielsweise in EP-A 27 943 und EP-A 311 894 beschrieben werden. Derartig beschlichtete Glasfasern können beispielsweise zur Verstärkung von Polyarylensulfiden verwendet werden (vgl. z.B. EP-A 409 524), jedoch wird das Problem der Hydrolysefestigkeit dadurch nicht gelöst. Zudem sind derartige Glasfasern für die Verstärkung von Polyamiden nur wenig geeignet, da die mechanischen Werte dieser Polyamid-Glasfaser-Verbunde nicht ausreichend sind.

US 4 487 797 beschreibt Glasfasern, welche mit oligomeren, wasserdispergierten, emulgierten oder gelösten Epoxidharzen beschlichtet werden. Bei diesen Epoxidharzen handelt es sich um polyfunktionelle Epoxide, welche mit Hilfe von externen Emulgatoren emulgiert bzw. dispergiert werden und in der Schlichte zusätzliche Mengen an hydrophilen Polyolen aufweisen. Die so erhältlichen Glasfasern sind vorwiegend zur Verstärkung von duroplastischen Harzen, besonders Vinylesterharzen, geeignet. Niedermolekulare bzw. oligomere, nichtreaktive Anteile in einer Menge, wie sie der externe Emulgator und das in US 4 487 797 vorgeschriebene, emulgierbare Poly(oxyalkylen-oxyethylen)-Polyol darstellen, vermindern jedoch die Filmqualität, so daß derartige Glasfasern eine schlechte Strangabgebundenheit aufweisen und sich schlecht handhaben lassen. Zudem vermindern die hydrophilen Schlichtebestandteile die Hydrolysefestigkeit, so daß auch diese Glasfasern nur zur Glasfaser-Polymer-Verbunden mit ungenügender Hydrolysefestigkeit führen.

Aufgabe der Erfindung war es, Formmassen in Form von Verbunden aus thermoplastischen Polymeren und Glasfasern zur Verfügung zu stellen, welche hervorragende mechanische Werte und verbesserte Langzeiteigenschaften, insbesondere Hydrolyseeigenschaften, speziell unter den Bedingungen der Heißwasserlagerung und des Heißwasser-Glykol-Tests, aufweisen.

Diese Aufgabe konnte überraschenderweise mit Formmassen aus thermoplatischen Polymeren, beschlichteten Glasfasern und den üblichen Zusatzstoffen und Hilfsmitteln gelöst werden und zwar dann, wenn die Schlichte der verwendeten Glasfasern ein epoxidfunktionelles, oligomeres Harz umfaßt, welches einen hohen Gehalt an Epoxidgruppen und eine hohe mittlere Funktionalität von mindestens 2,3 Epoxidgruppen pro Molekül aufweist und welches frei ist von an das Harz ungebundenen Emulgatoren.

Die erfindungsgemäßen Formmassen weisen hervorragende mechanische Eigenschaften und Temperaturbeständigkeit auf und sind hydrolytisch und solvolytisch äußerst beständig.

Gegenstand der Erfindung sind Formmassen, welche
A) 100 Gew.-Teile thermoplastische Polymere,
B) 5 bis 250 Gew.-Teile beschlichtete Glasfasern und
C) 0 bis 30 Gew.-Teile übliche Zusatzstoffe und Hilfsmittel enthalten,
dadurch gekennzeichnet, daß die Glasfasern (B) eine Schlichte aufweisen, die neben üblichen Schlichtemitteln ein epoxidfunktionelles, oligomeren Harz enthält, welches

i) einen Gehalt an Epoxidgruppen von 0,15 bis 0,75 Mol pro 100 g epoxidfunktionellem, oligomerem Harz und
ii) im Mittel eine Funktionalität von mindestens 2,3 Epoxidgruppen pro Molekül aufweist sowie
iii) frei ist von an das Harz ungebundenen Emulgatoren.

Bevorzugt handelt es sich bei dem in der Schlichte der Glasfasern enthaltenen, epoxidfunktionellen, oligomeren Harz um einen epoxidgruppenhaltigen Polyester, erhältlich durch Kondensation bzw. Addition von 6 bis 40 Gew.-% eines säuregruppenhaltigen, polyoxyalkylenmodifizierten Polyesters mit einem Gehalt an Oxyethyleneinheiten, so daß der Anteil von Oxyethyleneinheiten am Gesamtharz mindestens 5 % beträgt, und 60 bis 94 Gew.-% einer oder mehrerer Epoxidgruppen enthaltender Verbindungen, welche
a) einen Gehalt an Epoxidgruppen von 0,16 bis 1,25 Mol pro 100 g epoxidfunktionellen, oligomeren Harz und
b) im Mittel eine Funktionalität von mindestens 2,3 Epoxidgruppen pro Molekül aufweisen.

Ganz besonders bevorzugt handelt es sich bei dem in der Schlichte der Glasfasern enthaltenen, epoxidfunktionellen, oligomeren Harz um einen epoxidgruppenhaltigen Polyester, erhältlich durch Addition von 6 bis 40 Gew.-% eines säuregruppenhaltigen, Polyoxyalkylenmodifizierten Polyesters mit einem Gehalt an Oxyethyleneinheiten, so daß der Anteil von Oxyethyleneinheiten am Gesamtharz mindestens 5 % beträgt, und 60 bis 94 Gew.-% einer oder mehrerer Epoxidgruppen enthaltender Verbindungen der allgemeinen Formel (I) 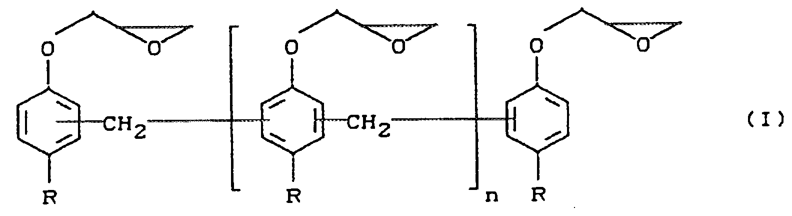 wobei
- R: Wasserstoff oder eine Alkylgruppe mit 1 bis 5 Kohlenstoffatomen und
- n: eine Zahl von 0,3 bis 4 bedeutet.

Die Formmassen werden zur Herstellung von Form-, Preß- und Spritzgrußteilen, Thermoformteilen, Halbzeugen, Platten, Behältern, Geräteteilen, Gehäusen, Rollen, Zahnrädern, Maschinenteilen und Walzen verwendet.

Die Formmassen enthalten bevorzugt aromatische und/oder aliphatische Polyamide, Poly(acrylensulfide) oder thermoplastische Polyester als thermoplastisches Polymer (A).

Für die in den erfindungsgemäßen Formmassen enthaltenden, beschlichteten Glasfasern (B) sind sowohl die für die Glasseidenfabrikation verwendeten, bekannten Glastypen, wie E-, A-, C- und S-Glas, als auch die bekannten Glasstabelfasererzeugnisse geeignet. Unter den genannten Glastypen für die Herstellung von Endlosglasfasern besitzen die E-Glasfasern aufgrund ihrer Alkalifreiheit, hohen Zugfestigkeit und ihrem hohen Elastizitätsmodul die größte Bedeutung für die Verstärkung von Kunststoffen.

Epoxidfunktionelle, oligomere Harze sind bevorzugt mit einem mittleren Molekulargewicht unter 2000, besonders bevorzugt unter 1000,

Die den epoxidfunktionellen Harzen zugrundeliegenden Verbindungen sind bevorzugt aliphatische, cycloaliphatische, aromatische und heterocyclische Verbindungen mit Epoxidgruppen, die an sich bekannt und technisch gebräuchlich sind. Solche Verbindungen sollen im Mittel 2 oder mehr Epoxidgruppen pro Molekül enthalten. Es muß allerdings mindestens eine mehr als difunktionelle Verbindung in einer solchen Menge mitverwendet werden, so daß das epoxidfunktionelle Harz im Mittel eine Funktionalität von mindestens 2,3 Epoxdidgruppen pro Molekül aufweist.

Die den oben genannten epoxidhaltigen Verbindungen zugrundeliegenden Verbindungen haben vorzugsweise bis 45 C-Atome und stellen epoxidierbare Di- oder Polyphenole, Di- oder Polycarbonsäuren, Di- oder Polycarbonsäureanhydride, Di- oder Polyalkohole oder mindestens zweifach ungesättigte Verbindungen dar.

Beispiele von Verbindungen mit mehr als zwei Epoxidgruppen sind:

Polyglycidylether polywertiger Phenole, beispielsweise von Novolaken (Umsetzungsprodukte von ein- oder mehrwertigen Phenolen mit Aldehyden, insbesondere Formaldehyd, in Gegenwart saurer Katalysatoren), Tris-(4-hydroxyphenyl)methan oder 1,1,2,2-Tetra(4-hydroxyphenyl)ethan; Epoxid-Verbindungen auf der Basis von aromatischen Aminen und Epichlorhydrin, beispielsweise Tetraglycidylmethylendianilin, N-Diepoxypropyl-4-aminophenylglycidylether; Glycidylester mehrwertiger aromatischer, aliphatischer und cycloaliphatischer Carbonsäuren; Glycidylether mehrwertiger Alkohole, beispielsweise von Glycerin, Trimethylolpropan und Petaerythrit und weitere Glycidylverbindungen wie Trisglycidylisocyanurat.

Bevorzugt sind Polyglycidylether polywertiger Phenole, besonders bevorzugt sind Polyglycidylether von Novolaken.

Es können jedoch auch zwei Epoxidgruppen enthaltende Verbindungen mitverwendet werden. Derartige Verbindungen werden in einer solchen Menge mitverwendet, daß die Mischung aus zwei Epoxidgruppen enthaltenden Verbindungen und mehr als zwei Epoxidgruppen enthaltenden Verbindungen im Mittel eine Funktionalität von mindestens 2,3, bevorzugt 2,5 bis 5,4 Epoxidgruppen pro Molekül aufweist.

Zwei Epoxidgruppen enthaltende Verbindungen sind beispielsweise Diglycidylether zweiwertiger Phenole wie Brenzkatechin, Resorcin, Hydrochinon, 4,4'-Dihydroxydiphenyldimethylmethan, 4,4'-Dihydroxy-3,3'-dimethyldiphenylpropan, 4,4'-Dihydroxydiphenylsulfon, Glycidylester zweiwertiger aromatischer, aliphatischer und cycloaliphatischer Carbonsäuren wie beispielsweise Phthalsäureanhydridbisglycidylether oder Adipinsäurebisglycidylether oder Glycidylether zweiwertiger aliphatischer Alkohole wie Butandiolbisglycidylether, Hexandiolbisglycidylether oder Polyoxyalkylenglykolbisglycidylether.

Die epoxidfunktionellen, oligomeren Harze können in geringem Umfang, d.h. unter Umsetzung von maximal 40 % aller Epoxidgruppen, bevorzugt maximal 15 % aller Epoxidgruppen modifiziert werden, bevorzugt um das Harz in eine in Wasser dispergierbare Form zu bringen. Die modifizierten epoxidfunktionellen, oligomeren Harze weisen nach der Modifizierung einen Gehalt an Epoxidgruppen von 0,15 bis 0,75 Mol pro 100 g epoxidfunktionellen, oligomerem Harz und im Mittel eine Funktionalität von mindestens 2,3 Epoxidgruppen pro Molekül auf und sind frei von an das Harz ungebundenen Emulgatoren.

Die säuregruppenhaltigen, polyoxyalkylenmodifizierten Polyester werden durch Veresterung von polyoxyethylen-, polyoxypropylen- bzw. gegebenenfalls höheren polyoxyalkylenhaltigen Polyalkoholen und Dicarbonsäuren oder deren veresterungsfähigen Derivaten sowie gegebenenfalls Monocarbonsäuren in an sich bekannter Weise (vgl. z.B. Houben-Weyl, Methoden der Organischen Chemie, Stuttgart, 1963, Bd. 14/2, S. 1-5, 21-23, 40-44; C. Martens Alkyd-Resins, Reinhold Publ. Comp. 1961, Reinhold Plastics Appl. Ser., 51-59) bis auf Säurezahlen von 5 bis 200, bevorzugt 30-100 mg KOH/g, erhalten. Es ist ebenfalls möglich, Monocarbonsäuren und Monoalkohole mit einzusetzen. Anschließend werden diese Polyester mit einer oder mehreren Epoxidgruppen enthaltenden Verbindungen, welche einen Gehalt an Epoxidgruppen von 0,16 bis 1,25 Mol pro 100 g epoxidfunktionellem, oligomerem Harz und im Mittel eine Funktionalität von mindestens 2,3 Epoxidgruppen pro Molekül aufweisen, bei Temperaturen zwischen 20 und 200°C, bevorzugt zwischen 80 und 150°C umgesetzt. Die Veresterung und die Epoxyaddition können in einer oder mehreren Stufen durchgeführt werden. In einer speziellen Ausführungsform werden die säuregruppenhaltigen, polyoxyalkylenmodifizierten Polyester mit einer oder mehreren Epoxidgruppen enthaltenden Verbindungen so umgesetzt, daß nach der Reaktion noch eine Restsäurezahl von 0,5 bis 20, vorzugsweise 4 bis 10 mg KOH/g verbleibt.

Die beschlichteten Glasfasern werden nach bekannten Verfahren hergestellt und können in der Schlichte weitere Komponenten wie Emulgatoren, weitere filmbildende Harze, Haftvermittler, Gleitmittel und Hilfsstoffe wie Netzmittel oder Antistatika enthalten. Die Haftvermittler, Gleitmittel und Hilfsstoffe, das Verfahren zur Herstellung, das Verfahren der Beschlichtung und die Nachbearbeitung der Glasfasern sind an sich bekannt und beispielsweise in K.L. Löwenstein, "The Manufacturing Technology of Continuous Glass Fibres", Elsevier Scientific Publishing Corp., Amsterdam, London, New York, 1973 beschrieben. Die Glasfasern können über beliebige Methoden beschlichtet werden, beispielsweise mit Hilfe geeigneter Vorrichtungen, wie z.B. Sprüh- oder Walzenapplikatoren, auf die mit hoher Geschwindigkeit aus Spinndüsen gezogenen Glasfilamente sofort nach ihrem Erstarren, d.h. noch vor dem Aufwickeln, aufgetragen werden. Es ist aber auch möglich, die Fasern im Anschluß an den Spinnprozeß in einem Tauchbad zu beschlichten.

Das epoxidfunktionelle, oligomere Harz ist in der Schlichte der Glasfasern bezogen auf den Feststoff der Schlichte bevorzugt in einer Menge von 50 bis 95 Gew.-%, besonders bevorzugt zwischen 50 und 85 Gew.-%, enthalten. Selbstverständlich können den erfindungsgemäßen Schlichten auch weitere filmbildende Harze, wie z.B. auf Basis Polyurethan, Polyvinylacetat, höhermolekularer Epoxidharze oder Polyester, beigemengt werden. Der Anteil der Schlichte beträgt, bezogen auf die beschlichteten Glasfasern, bevorzugt 2 bis 0,1 Gew.-%, besonders bevorzugt 1 bis 0,5 Gew.-%.

Die in den Formmassen enthaltenen, thermoplastischen Polymere (A) umfassen eine Vielfalt thermoplastischer Polymere. Beispielsweise sind als thermoplastische Polymere geeignet: Polymerisate wie Styrol/Acrylnitril-Copolymere, ABS, Polymethylmethacrylat oder Polyoxymethylen, aromatische und/oder aliphatische Polyamide, Polykondensate wie Polycarbonat, Polyethylenterephthalat, Polybutylenterephthalat, flüssigkristalline Polyarylester, Polyphenylenoxid, Polysulfon, Polyarylensulfid, Polyarylsulfon, Polyethersulfon, Polyarylether oder Polyetherketon oder Polyaddukte wie Polyurethane oder deren Gemische.

Bevorzugt sind Polyester wie Polyethylenterephthalat und Polybutylenterephthalat und Polyarylensulfide wie Polyphenylensulfid und Polyamide.

Als Polyamide in den erfindungsgemäßen Formmassen eignen sich alle teilkristallinen Polyamide, insbesondere Polyamid-6 und Polyamid-6,6, Polyamid-4,6 und teilkristalline Copolyamide auf der Basis dieser Komponenten. Weiterhin eignen sich teilkristalline Polyamide, deren Säurekomponente insbesondere ganz oder teilweise (neben Adipinsäure bzw, ε-Caprolactam) aus Terephthalsäure und/oder Isophthalsäure und/oder Korksäure und/oder Sebacinsäure und/oder Azelainsäure und/oder Dodecandicarbonsäure und/oder Adipinsäure und/oder Cyclohexandicarbonsäure besteht, und deren Diaminkomponente ganz oder teilweise insbesondere aus m- und/oder p-Xylylendiamin und/oder Hexamethylendiamin und/oder 2,4,4-Trimethylhexamethylendiamin und/oder Isophorondiamin besteht und deren Zusammensetzung aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der oben genannten Ausgangskomponenten, hergestellt werden.

Bevorzugte teilkristalline Polyamide sind Polyamid-6, Polyamid-4,6, Polyamid-6,6 oder Copolyamide mit nur geringen Anteilen (bis etwa 10 Gew.-%) der Co-Komponenten. Besonders bevorzugt sind Polyamid-6 und Polyamid-6,6.

Es können auch amorphe Polyamide eingesetzt werden. Sie werden erhalten durch Polykondensation von Diaminen, beispielsweie Ethylendiamin, Tetramethylendiamin, Hexamethylendiamin, Decamethylendiamin, 2,2,4- und/oder 2,4,4-Trimethylhexamethylendiamin, m- und/oder p-Xylylendiamin, Bis(4-amino-cyclohexyl)methan oder Gemischen aus 4,4'- oder 2,2'-Diamino-dicyclohexylmethanen, 2,2-Bis(4-amino-cyclohexyl)propan, 3,3'-Dimethyl-4,4'-diamino-dicyclohexylmethan, 3-Aminoethyl-3,5,5-trimethyl-cyclohexylamin, 2,5- und/oder 2,6-Bis-(aminomethyl)-norbornan und/oder 1,4-Diaminomethylcyclohexan, mit Dicarbonsäuren, beispielsweise Oxalsäure, Adipinsäure, Azelainsäure, Decandicarbonsäure, Heptadecandicarbonsäure, 2,2,4- undloder 2,4,4-trimethyladipinsäure, Isophthalsäure oder geringen Mengen an Terephthalsäure. Selbstverständlich sind auch amorphe Copolymere, die durch Polykondensation mehrerer Monomerer erhalten werden, geeignet, ferner solche Copolymere, die unter Zusatz von Aminocarbonsäuren wie ω-Aminocapronsäure, ω-Aminodecansäure oder ω-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diaminen, wie 4,4'-Diaminodicyclohexylmethan, Isophorondiamin, 2,2,4- und/oder 2,4,4-Trimethyl-hexamethylendiamin, 2,5- und/oder 2,6-Bis-(aminomethyl)norbornan; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4-und/oder 2,4,4-Trimethylhexamethylendiamin.

Anstelle des reinen 4,4'-Diamino-dicyclohexylmethans können auch Gemische der stellungsisomeren Diaminodicyclohexylmethane eingesetzt werden, die sich zusammensetzen aus
70 bis 99 Mol-% des 4,4'-Diaminoisomeren,
1 bis 30 Mol-% des 2,4'-Diaminiisomeren,
0 bis 2 Mol-% des 2,2'-Diaminoisomeren,
und gegebenenfalls entsprechend höher kondensierten Diaminen, die durch Hydrierung von Diaminophenylmethan technischer Qualität erhalten werden.

Die Polyamide können auch aus Mischungen aus einem Copolyamid, bestehend aus wiederkehrenden Einheiten, die sich von der Adipinsäure und Hexamethylendiamin ableiten und Einheiten, die sich von ε-Caprolactam ableiten und Polyhexamethylenadipinsäureamid, wie sie in DE-OS 37 35 404 beschrieben werden, oder von teilkristallinen und amorphen Polyamiden bestehen, wobei vorzugsweise der amorphe Polyamidanteil unter dem teilkristallinen Polyamidanteil liegt.

Bevorzugte Polyamide sind teilkristalline Polyamide auf Basis Polyamid-6, Polyamid-6,6 und teilkristalline Polyamide auf der Basis dieser Hauptkomponenten unter Zusatz von Cokomponenten der erwähnten Art.

Die erfindungsgemäßen Formmassen umfassen pro 100 Gew.-Teilen thermoplastische Polymere 5 bis 250 Gew.-Teile beschlichtete Glasfasern und 0 bis 30 Gew.-Teile, bevorzugt 0 bis 20 Gew.-Teile, übliche Zusatzstoffe und Hilfsmittel. Die Mengen der Glasfasern richtet sich nach den Eigenschaften des Matrixpolymers und kann aufgrund der geringen Schmelzviskosität für Polyarylensulfide und flüssigkristalline Polyarylester bis zu 70 % der gesamten Formmasse betragen. Bevorzugt sind, insbesondere für Polymere mit höherer Schmelzviskosität, Füllgrade von ca. 5 bis 30 %.

Die erfindungsgemäßen Formmassen aus thermoplastischen Polymeren, Glasfasern und üblichen Zusatzstoffen und Hilfsmitteln können über beliebige Methoden hergestellt werden, beispielsweise indem man die beschlichteten Glasfasern in Form von Schnittglas ("chopped strands"), Rovings oder Kurzglas in Extrudern mit dem aufgeschmolzenen Thermoplasten vermischt, zu Strängen verpreßt und zu Kunststoffgranulat verarbeitet. Dieses Kunststoffgranulat dient als Ausgangsbasis zur Herstellung von Formteilen und Gegenständen aus glasfaserverstärktem thermoplastischen Kunststoff. Es können den Formmassen übliche Zusatzstoffe und Hilfsmittel, beispielsweise weitere Füllstoffe, Stabilisatoren, Pigmente oder Farbstoffe, zugesetzt werden. Als derartige Stoffe kommen beispielsweise Calciumcarbonat, Talkum, Kieselgel, Bariumsulfat, Calciumsulfat, Kaolin, Bentonit, Eisenoxide, Titandioxid, Zeolithe, Wollastonit, Dolomit, Zinkoxid, Magnesiumcarbonat, Molybdendisulfid, gemahlenes Glas, Glaskugeln, Quarzmehl oder Mischungen hiervon in Betracht. Weitere faserförmige Füllstoffe sind beispielsweise Aramidfasern, Kohlenstoffasern, Metallfasern oder Keramikfasern. Weitere Additive umfassen zum Beispiel Entformungsmittel, Gleitmittel, Alterungsschutzmittel, Nukleierungsmittel oder Flammschutzmittel.

Zudem können weitere Polymere als Blendpartner zugesetzt werden. Beispiele von solchen Polymeren sind Polyethylen, Polypropylen, Polystyrol, Polyvinylchlorid, Polyphenylensulfidsulfon, Polyphenylensulfidketon, Polyimide, Polyamidimide, Siliconharze, Fluorharze oder Mischungen oder Co- oder Pfropfpolymere aus diesen Polymeren.

Die erfindungsgemäßen Formmassen können auf übliche Weise zu Form-, Preß- und Spritzgußteilchen, Thermoformteilen, Halbzeugen, Platten wie z.B. Leiterplatten, Behältern, Geräte- und Fahrzeugteilen, Gehäusen, Rollen, Zahnrädern, Maschinenteilen, Fasern, Folien, Profilen, Scheinwerferreflektoren und Walzen verarbeitet werden. Die erfindungsgemäßen Formmassen können generell in vorteilhafter Weise dort eingesetzt werden, wo thermoplastisch verarbeitbare Massen eingesetzt werden.

Die vorliegende Erfindung soll anhand der nachfolgenden Beispiele näher erläutert werden.

### Beispiele

### Beispiel 1a (wasserdispergierbares, emulgatorfreies, oligomeres Harz)

In einen Dreihalskolben mit mechanischem Rührer und Innenthermometer werden 77,5 g eines Polyethylenglykols mit einem mittleren Molekulargewicht von 1550 g/Mol und 10 g Bernsteinsäureanhydrid zusammengegeben, auf 100°C erhitzt und bis zur Säurezahl 68 mg KOH/g gerührt. Es werden 312,5 g eines epoxidierten Novolakes auf der Basis von Phenol und Formaldehyd mit einem Epoxidäquivalentgewicht von 175 g/Äquivalent und 1 g Natriumcarbonat zugegeben und bis zur Säurezahl 0 gerührt. Das fertige Epoxidharz besitzt einen Gehalt an Epoxidgruppen von 0,42 Mol pro 100 g Harz und im Mittel eine Funktionalität von ca. 3,0 Epoxidgruppen pro Molekül. Die Temperatur im Reaktionskolben wird auf 60°C gesenkt und 600 ml ca. 70°C warmes Wasser in Protionen von ca. 100 ml zugegeben. Es entsteht eine weiße, homogene, feinteilige und lagerstabile Dispersion mit einer Viskosität von ca. 20 mPa.s.

### Beispiel 1b (Herstellung beschlichteter Glasfasern)

Die Schlichte der Glasfasern setzt sich zusammen aus den Schlichtekomponenten:
- 0,5 Gew.-%: γ-Aminopropyltriethoxysilan,
- 5,0 Gew.-%: wasserdispergiertes Epoxidharz gemäß Beispiel 1,
- 0,5 Gew.-%: Polyalkylenglykol und
- 94,0 %: Wasser.

Die Schlichte wird über einen Kiss-rollapplikator auf Glasfasern mit einem Durchmesser von 10 µm aufgebracht. Die Glasfasern werden zu Cakes (Bobinen) gewickelt und anschließend 10 Stunden bei 130°C getrocknet. Die Glasfasern werden nach der Trocknung in 4,5 mm lange Chops geschnitten.

### Beispiel 1c, 1d, 1e und 1f

### (Herstellung von Formmassen)

Verwendete Komponenten:
A1) Polyamid-6,6 mit der relativen Viskosität 3,0 (gemessen an einer 1 Gew.%igen Lösung in m-Kresol bei 25°C)
A2) Polyphenylensulfid (PPS; η_{PPS} = 50-60 Pas).
B1) Für Polyamid und Polyphenylensulfid geeignete Glasfaser gemäß EP-A 137 427
B2) Glasfaser gemäß Beispiel 1b
C) Masterbatch aus 90 Gew.-% Polyamid-6 mit einer relativen Viskosität 4,0 (gemessen an einer 1 Gew.-%igen Lösung in m-Kresol bei 25°C) und 10 Gew.-% Kupfer(I)-iodid/Kaliumbromid (Gewichtsverhältnis 1:3)
D) Masterbatch aus Polyamid-6 und Ruß (Gewichtsverhältnis 1:1)

### Beispiel 1c (nicht erfundungsgemäß) und 1d (erfindungsgemäß)

Polyamid (A1) und die Komponenten (C) bzw. (D) werden gemischt und auf einem kontinuierlich arbeitenden Doppelwellenextruder aufgeschmolzen. Über einen zweiten Dosiertrichter werden die Glasfasern (B1) bzw. (B2) in die Schmelze dosiert. Die Zylindertemperaturen werden dabei so gewählt, daß Massetemperaturen von 280 bis 330°C eingehalten werden. Der Schmelzestrang wird in Wasser abgeleitet, granuliert und getrocknet.

Von den Formmassen werden auf einer üblichen Spritzgußmaschine 80 x 10 x 4 mm-Prüfstäbe und Zugstäbe hergestellt. Geprüft werden der Biege-E-Modul nach DIN 53 437, der Zug-E-Modul nach DIN 53 457, die Reißfestigkeit und die Reißdehnung nach DIN 53 455 sowie die Schlagzähigkeit bei Raumtemperatur nach Izod (ISO 180/IC), spritzfrisch und nach bestimmten Lagerzeiten der Stäbe in einer Ethylenglykol/Wasser-Mischung (1:1) bei 130°C.

**Tabelle 1**

| Zusammensetzung der Formmassen (Angaben in Gew.-%) | | | | | |
|---|---|---|---|---|---|
| Komponente Nr. | A1 | B1 | B2 | C | D |
| Beispiel 1c | 68,6 | 30 | - | 1,4 | 0,2 |
| Beispiel 1d | 68,6 | - | 30 | 1,4 | 0,2 |

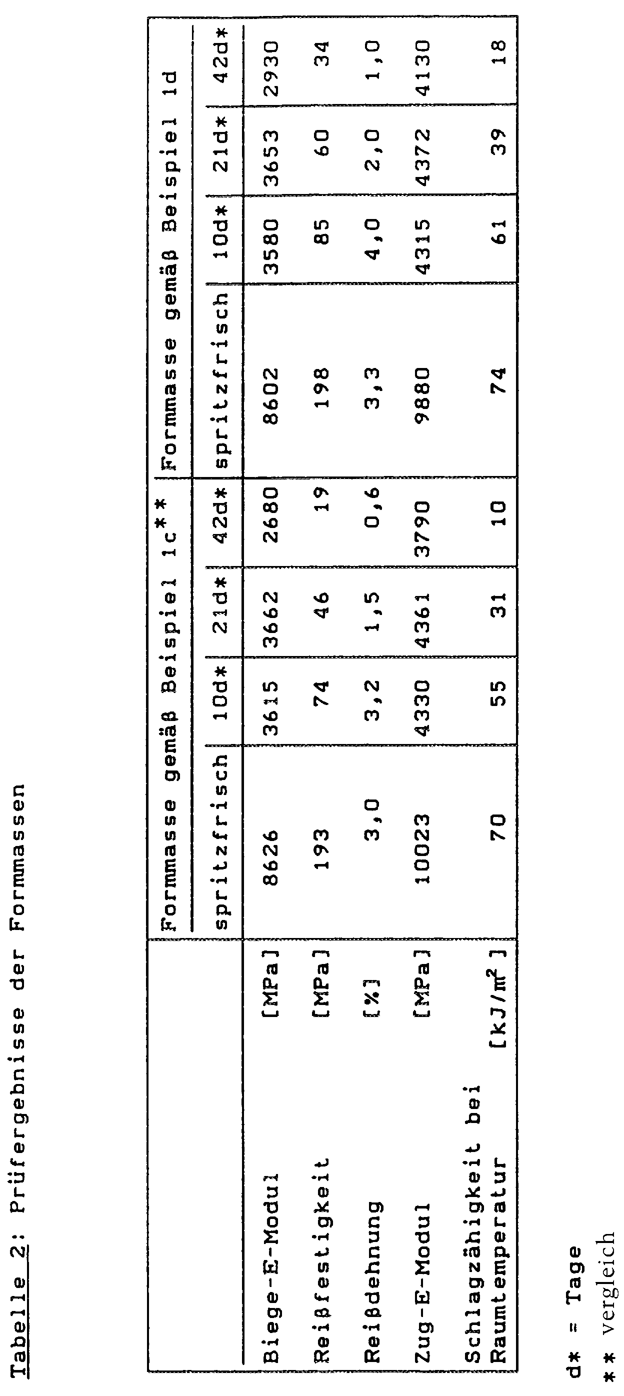

### Beispiel 1e (nicht erfindungsgemäß) und 1f (erfindungsgemäß)

Gemäß Tabelle 3 werden Glasfasern auf einem Extruder mit Polyphenylensulfid bei einer Extrudertemperatur von 330°C zu einer Formmasse extrudiert und granuliert. Von den Formmassen werden auf einer üblichen Spritzgußmaschine 80 x 10 x 4 mm-Prüfstäbe und Zugstäbe hergestellt. Geprüft werden Biegefestigkeit nach DIN 53 452, Zugfestigkeit nach DIN 53 455 sowie die Schlagzähigkeit bei Raumtemperatur nach Izod (ISO 180/IC), spritzfrisch und nach bestimmten Lagerzeiten der Stäbe in Wasser bei 98°C.

**Tabelle 3**

| Zusammensetzung der Formmassen (Angaben in Gew.-%) | | | |
|---|---|---|---|
| Komponente Nr. | A2 | B1 | B2 |
| Beispiel 1e | 60,0 | 40,0 | - |
| Beispiel 1f | 60,0 | - | 40,0 |

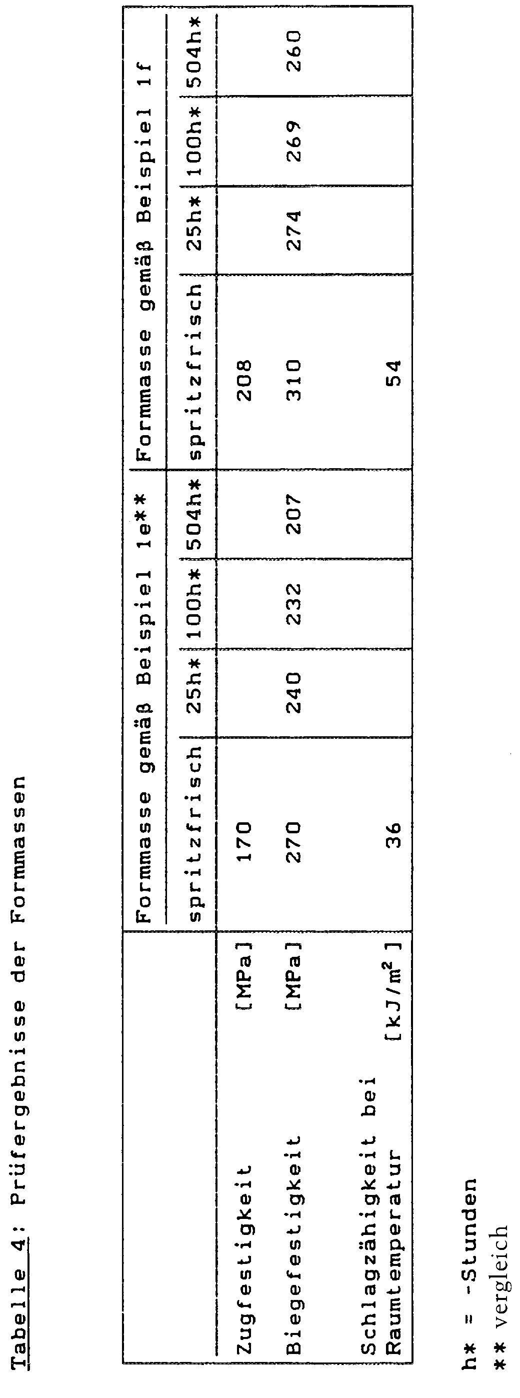

## Patentansprüche

1. Formmasse, welche
A) 100 Gew.-Teile thermoplastische Polymere,
B) 5 bis 250 Gew.-Teile beschlichtete Glasfasern und
C) 0 bis 30 Gew.-Teile übliche Zusatzstoffe und Hilfsmittel enthält,
dadurch gekennzeichnet, daß die Glasfasern (B) eine Schlichte aufweisen, die neben üblichen Schlichtemitteln ein epoxidfunktionelles, oligomeres Harz enthält, welches
i) einen Gehalt an Epoxidgruppen von 0,15 bis 0,75 Mol pro 100 g epoxidfunktionellem, oligomerem Harz und
ii) im Mittel eine Funktionalität von mindestens 2,3 Epoxidgruppen pro Molekül aufweist sowie
iii) frei ist von an das Harz ungebundenen Emulgatoren.

2. Formmasse gemäß Anspruch 1, dadurch gekennzeichnet, daß es sich bei dem in der Schlichte der Glasfasern enthaltenen, epoxidfunktionellen, oligomeren Harz um einen epoxidgruppenhaltigen Polyester handelt, erhältlich durch Kondensation bzw. Addition von 6 bis 40 Gew.-% eines säuregruppenhaltigen, polyoxyalkylenmodifizierten Polyesters mit einem Gehalt an Oxyethyleneinheiten, so daß der Anteil von Oxyethyleneinheiten am Gesamtharz mindestens 5 % beträgt, und 60 bis 94 Gew.-% einer oder mehrerer Epoxidgruppen enthaltender Verbindungen, welche
a) einen Gehalt an Epoxidgruppen von 0,16 bis 1,25 Mol pro 100 g epoxidfunktionellem, oligomerem Harz und
b) im Mittel eine Funktionalität von mindestens 2,3 Epoxidgruppen pro Molekül aufweisen.

3. Formmasse gemäß Anspruch 1 oder 2, dadurch gekennzeichnet, daß es sich bei dem in der Schlichte der Glasfasern enthaltenen, epoxidfunktionellen, oligomeren Harz um einen epoxidgruppenhaltigen Polyester handelt, erhältlich durch Addition von 6 bis 40 Gew.-% eines säuregruppenhaltigen, polyoxyalkylenmodifizierten Polyesters mit einem Gehalt an Oxyethyleneinheiten, so daß der Anteil von Oxyethyleneinheiten am Gesamtharz mindestens 5 % beträgt, und 60 bis 94 Gew.-% einer oder mehrerer Epoxidgruppen enthaltender Verbindungen der allgemeinen Formel (I) 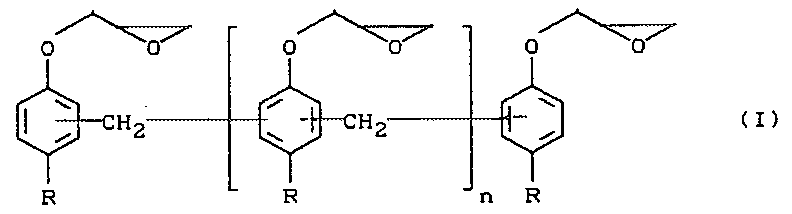 wobei
R Wasserstoff oder eine Alkylgruppe mit 1 bis 5 Kohlenstoffatomen und
n eine Zahl von 0,3 bis 4 bedeutet.

4. Formmasse gemäß Anspruch 1, dadurch gekennzeichnet, daß es sich bei dem thermoplastischen Polymer um aromatische und/oder aliphatische Polyamide handelt.

5. Formmasse gemäß Anspruch 1, dadurch gekennzeichnet, daß es sich bei dem thermoplastischen Polymer um ein oder mehrere Poly(arylensulfide) handelt.

6. Formmasse gemäß Anspruch 1, dadurch gekennzeichnet, daß es sich bei dem thermoplastischen Polymer um ein oder mehrere thermoplastische Polyester handelt.

7. Verwendung der Formmassen nach einem der Ansprüche 1 bis 6 zur Herstellung von Form-, Preß- und Spritzgußteilen, Thermoformteilen, Halbzeugen, Platten, Behältern, Geräteteilen, Gehäusen, Rollen, Zahnrädern, Maschinenteilen und Walzen.

## Claims

1. Moulding composition which contains
A) 100 parts by weight of thermoplastic polymers,
B) 5 to 250 parts by weight of sized glass fibres and
C) 0 to 30 parts by weight of conventional additives and auxiliary substances,
characterised in that the glass fibres (B) have a size which contains, in addition to conventional sizing agents, an epoxy-functional, oligomeric resin which
i) has a content of epoxy groups of 0.15 to 0.75 mol per 100 g of epoxy-functional, oligomeric resin and
ii) has an average functionality of at least 2.3 epoxy groups per molecule and
iii) contains no emulsifiers not bound to the resin.

2. Moulding composition according to claim 1, characterised in that the epoxy-functional, oligomeric resin contained in the glass fibre size is a polyester containing epoxy groups, which polyester may be obtained by condensation or addition of 6 to 40 wt.% of a polyalkylene oxide-modified polyester containing acid groups and having a content of ethylene oxide units such that the proportion of ethylene oxide units in the overall resin is at least 5%, and 60 to 94 wt.% of one or more compounds containing epoxy groups which
a) have a content of epoxy groups of 0.16 to 1.25 mol per 100 g of epoxy-functional, oligomeric resin and
b) an average functionality of at least 2.3 epoxy groups per molecule.

3. Moulding composition according to claim 1 or 2, characterised in that the epoxy-functional, oligomeric resin contained in the glass fibre size is a polyester containing epoxy groups, which polyester may be obtained by addition of 6 to 40 wt.% of a polyalkylene oxide-modified polyester containing acid groups and having a content of ethylene oxide units such that the proportion of ethylene oxide units in the overall resin is at least 5%, and 60 to 94 wt.% of one of more compounds of the general formula (I) containing epoxy groups 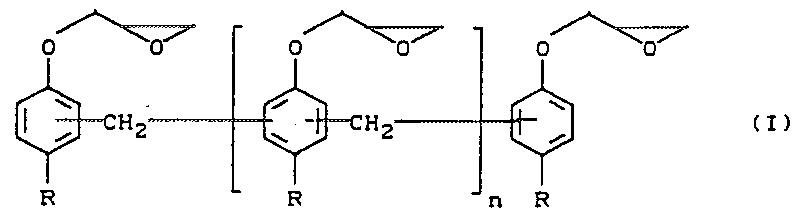 wherein
R means hydrogen or an alkyl group with 1 to 5 carbon atoms and
n means a number from 0.3 to 4.

4. Moulding composition according to claim 1, characterised in that the thermoplastic polymer comprises aromatic and/or aliphatic polyamides.

5. Moulding composition according to claim 1, characterised in that the thermoplastic polymer comprises one or more poly(arylene sulphides).

6. Moulding composition according to claim 1, characterised in that the thermoplastic polymer comprises one or more thermoplastic polyesters.

7. Use of the moulding compositions according to one of claims 1 to 6 for the production of mouldings, compression moulded parts, injection moulded parts, thermoformed parts, semi-finished products, sheets, containers, equipment parts, casings, rollers, gears, machine parts and rolls.

## Revendications

1. Matière à mouler contenant
A) 100 parties en poids de polymères thermoplastiques,
B) 5 à 250 parties en poids de fibres de verre ensimées et
C) 0 à 30 parties en poids d'additifs et produits auxiliaires usuels,
caractérisée en ce que les fibres de verre (B) portent un ensimage qui, avec des produits d'ensimage usuels, contient une résine oligomère à fonctions époxydes qui
i) a une teneur en groupes époxydes de 0,15 à 0,75 mol pour 100 g de la résine oligomère à fonctions époxydes et
ii) a une fonctionnalité moyenne d'au moins 2,3 groupes époxydes par molécule et
iii) est exempte d'agents émulsionnants non fixés sur la résine.

2. Matière à mouler selon la revendication 1, caractérisée en ce que la résine oligomère à fonctions époxydes contenue dans l'ensimage des fibres de verre est un polyester à groupes époxydes obtenu par condensation ou fixation par addition de 6 à 40% en poids d'un polyester à groupes acides et à modification polyoxyalkylène, à une teneur en motifs oxyéthylène telle que la teneur de la résine totale en motifs oxyéthylène soit d'au moins 5%, sur 60 à 94% en poids d'un ou plusieurs composés contenant des groupes époxydes,
a) à une teneur en groupes époxydes de 0,16 à 1,25 mol pour 100 g de la résine oligomère à fonctions époxydes et
b) à une fonctionnalité moyenne d'au moins 2,3 groupes époxydes par molécule.

3. Matière à mouler selon la revendication 1 ou 2, caractérisée en ce que la résine oligomère à fonctions époxydes contenue dans l'ensimage des fibres de verre est un polyester à groupes époxydes obtenu par fixation par addition de 6 à 40% en poids d'un polyester à groupes acides et à modification polyoxyalkylène, contenant des motifs oxyde d'éthylène en quantité telle que la teneur de la résine totale en motifs oxyéthylène soit d'au moins 5%, sur 60 à 94% en poids d'un ou plusieurs composés contenant des groupes époxydes et répondant à la formule générale (I) 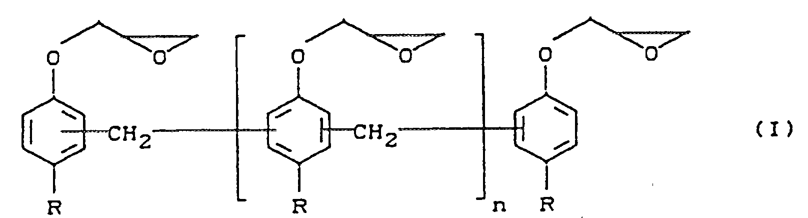 dans laquelle
R représente l'hydrogène ou un groupe alkyle en C₁-C₅ et
n est un nombre allant de 0,3 à 4.

4. Matière à mouler selon la revendication 1, caractérisée en ce que le polymère thermoplastique est un polyamide aromatique et/ou aliphatique.

5. Matière à mouler selon la revendication 1, caractérisée en ce que le polymère thermoplastique consiste en un ou plusieurs poly(sulfures d'arylène).

6. Matière à mouler selon la revendication 1, caractérisée en ce que le polymère thermoplastique consiste en un ou plusieurs polyesters thermoplastiques.

7. Utilisation des matières à mouler selon une des revendications 1 à 6 pour la fabrication de pièces façonnées, moulées par compression et/ou par injection, de pièces thermoformées, de produits semi-finis, de plaques, de récipients, de pièces d'appareils, de logements, de poulies, de roues dentées, de pièces de machine et de cylindres.
